# EUROPEAN PATENT APPLICATION

(11) **EP 3 951 965 A1**
(43) Date of publication of application: **09.02.2022**
(21) Application number: 21177831.1
(22) Date of filing: 04.06.2021
(51) Int. Cl.: H01M 8/04119, H01M 8/04291, H01M 8/0612, H01M 8/124

(54) **SOLID OXIDE FUEL CELL WITH WATER RECYCLE**

(30) Priority: 07.08.2020 US 202016988044
(71) Applicant: Hamilton Sundstrand Corporation, Charlotte, NC 28217-4578 (US)
(72) Inventor: JUNKER, Sven Tobias, Berlin, CT, 06037 (US); ZHU, Tianli, Glastonbury, 06033 (US); EMERSON, Sean C., Broad Brook, 06016 (US)
(74) Representative: Dehns

(57) **Abstract**

A proton-conducting solid oxide fuel cell system (10) includes a proton-conducting solid oxide fuel cell including an anode through which a flow of fuel is directed, and a cathode through which a flow of air containing 9% to 100% oxygen is directed, and a water recovery portion. The water recovery portion (16) includes an anode water recovery unit to recover anode water from anode products output from the anode, and a cathode water recovery unit to recover cathode water from cathode products output from the cathode.

## Description

### STATEMENT OF FEDERAL SUPPORT

This invention was made with Government support under DEAR0000953 awarded by the Department of Energy. The Government has certain rights in the invention.

### BACKGROUND

Exemplary embodiments pertain to the art of fuel cells, and in particular to solid oxide fuel cells.

Traditional solid oxide fuel cells (SOFCs) operate at very high temperatures and therefore require specialized materials. These specialized materials are typically expensive and heavy. A new class of SOFCs conducts protons rather than oxygen ions and operates at lower temperatures. Therefore, the proton-conducting SOFC can be built with less expensive and lighter weight materials.

Traditional SOFCs conduct oxygen across a membrane and form water on the anode side of the fuel cell. If fuel needs to be pre-reformed, water for this reaction is readily available on the anode side of the fuel cell, and recycling water from the anode is straightforward. Proton-conducting SOFCs, however, form water on the cathode side of the fuel cell. This requires a more complex water management arrangement to allow for self-sustained water operation.

### BRIEF DESCRIPTION

In one embodiment, a proton-conducting solid oxide fuel cell system includes a proton-conducting solid oxide fuel cell including an anode through which a flow of fuel is directed, and a cathode through which a flow of air containing 9% to 100% oxygen is directed, and a water recovery portion. The water recovery portion includes an anode water recovery unit to recover anode water from anode products output from the anode, and a cathode water recovery unit to recover cathode water from cathode products output from the cathode.

Additionally or alternatively, in this or other embodiments the anode water and the cathode water are collected for re-use by the system.

Additionally or alternatively, in this or other embodiments an anode heat exchanger is located upstream of the anode at which the cathode products exchange thermal energy with the flow of fuel.

Additionally or alternatively, in this or other embodiments a cathode heat exchanger is located upstream of the cathode at which the cathode products exchange thermal energy with the flow of air.

Additionally or alternatively, in this or other embodiments a fuel processing and heat recovery portion includes a mixer wherein the anode water and the cathode water are introduced to a fuel supply flow at the fuel processing and heat recovery portion and directed toward the anode as the flow of fuel.

Additionally or alternatively, in this or other embodiments the system includes a boiler upstream of the mixer. The anode water and the cathode water are converted to steam in the boiler via thermal energy exchange with the cathode products.

Additionally or alternatively, in this or other embodiments a desulfurizer is located upstream of the mixer, through which the fuel supply flow is passed.

Additionally or alternatively, in this or other embodiments a fuel reformer pre-reforms 25-100% of the anode water, cathode water and fuel supply flow mixture prior to sending the mixture to an anode heat exchanger.

Additionally or alternatively, in this or other embodiments a processing heat exchanger is located downstream of the mixer to heat the flow of fuel by thermal energy exchange with the anode products prior to the heated mixture entering the reformer, and/or the reformer is heated with a resistive heater, and/or a combustion furnace, and/or an inductive heater, a heated fluid moving through a jacketed heater, such as supercritical steam or pressurized water or hot exhaust from an exhaust gas burner, and/or via heat integration with the solid oxide fuel cell.

Additionally or alternatively, in this or other embodiments a tail fuel expander is located between the fuel processing and heat recovery portion and the water recovery portion through which the anode products are directed.

Additionally or alternatively, in this or other embodiments an air expander is located between the fuel processing and heat recovery portion and the water recovery portion through which the cathode products are directed.

Additionally or alternatively, in this or other embodiments one or more of the anode water or the cathode water is recovered by one of an air-cooled condenser and a water separator, or a membrane separator, a liquid cooled condenser, or by an expansion valve cooler.

Additionally or alternatively, in this or other embodiments the anode water recovery unit separates the anode water from an output fuel flow and the cathode recovery unit separates the cathode water from an output air flow.

Additionally or alternatively, in this or other embodiments the system includes one of a reciprocating engine following an Otto or Diesel thermodynamic cycle; a Brayton cycle machine, such as a gas turbine engine; a thermoelectric device; a Stirling engine; or a Rankine cycle machine to which the output fuel flow is directed.

In another embodiment, a method of operating a proton-conducting solid oxide fuel cell system includes directing a flow of fuel through an anode, directing a flow of air containing 9% to 100% oxygen through a cathode, recovering anode water from anode products output from the anode via an anode condenser and an anode water separator, the anode water separated from an output fuel flow, and recovering cathode water from cathode products output from the cathode via a cathode condenser and a cathode water separator, the cathode water separated from an output air flow.

Additionally or alternatively, in this or other embodiments the anode water and the cathode water are collected for re-use by the system.

Additionally or alternatively, in this or other embodiments the anode water and the cathode water are introduced to a fuel supply flow at a mixer of a fuel processing and heat recovery portion and the mixture is directed toward the anode as the flow of fuel.

Additionally or alternatively, in this or other embodiments the anode water and the cathode water are converted to steam at a boiler upstream of the mixer, the anode water and the cathode water converted to steam in the boiler via thermal energy exchange with the cathode products.

Additionally or alternatively, in this or other embodiments the flow of fuel is heated at a processing heat exchanger downstream of the mixer, by thermal energy exchange with the anode products.

Additionally or alternatively, in this or other embodiments the cathode products exchange thermal energy with the flow of fuel at an anode heat exchanger located upstream of the anode.

### BRIEF DESCRIPTION OF THE DRAWINGS

The following descriptions should not be considered limiting in any way. With reference to the accompanying drawings, like elements are numbered alike:
FIG. 1 is a schematic illustration of a low temperature proton-conducting solid oxide fuel cell (p-SOFC) with water recycle;
FIG. 2 is a schematic illustration of a fuel processing and heat recovery portion of a p-SOFC system;
FIG. 3 is a schematic illustration of a water recovery portion of a p-SOFC system; and
FIG. 4 is a schematic illustration of a bottoming cycle portion of a p-SOFC system.

### DETAILED DESCRIPTION

A detailed description of one or more embodiments of the disclosed apparatus and method are presented herein by way of exemplification and not limitation with reference to the Figures.

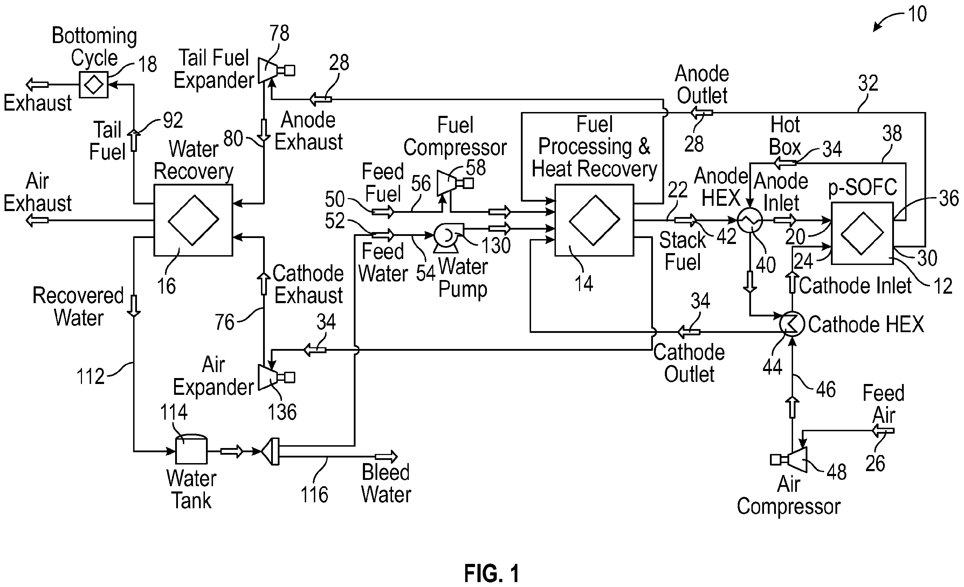

Referring to FIG. 1, illustrated is a schematic view of a system 10 of a low temperature proton-conducting solid oxide fuel cell (p-SOFC) with water recycle. The system 10 includes a p-SOFC 12, a fuel processing and heat recovery portion 14, a water recovery portion 16 and a bottoming cycle portion 18, which will all be explained in further detail below.

The p-SOFC 12 includes an anode inlet 20 through which a fuel flow 42 is introduced via a fuel line 22, and a cathode inlet 24 through which an air flow 26 is introduced via an air line 46. The reaction in the p-SOFC 12 generates electricity. Anode products 28 exit the p-SOFC 12 through an anode outlet 30 via an anode outlet line 32. Similarly, cathode products 34 exit the p-SOFC 12 through a cathode outlet 36 via a cathode outlet line 38. In some embodiments, the cathode products 34 are directed through an anode heat exchanger 40 for thermal energy exchange with the fuel flow 42 prior to the fuel flow 42 entering the anode inlet 20. Further, in some embodiments, a cathode heat exchanger 44 is located along the air line 46 upstream of the cathode inlet 24 to exchange thermal energy with the cathode products 34, thereby conditioning the air flow 26 prior to introduction into the cathode inlet 24. Further, in some embodiments the air flow 26 is directed through an air compressor 48, which may be located upstream of the cathode heat exchanger 44. In some embodiments, air flow 26 is an oxygen-containing mixture with 9% to 100% oxygen.

The anode products 28 and the cathode products 34 are introduced to the fuel processing and heat recovery portion 14, along with a fuel supply flow 50 via a fuel input line 56, and a water supply 52 via a water supply line 54. In some embodiments, the fuel supply flow 50 may be directed through a fuel compressor 58 upstream of the fuel processing and heat recovery portion 14. Further, a water pump 130 may be utilized to introduce the water supply 52 into the fuel processing and heat recovery portion 14.

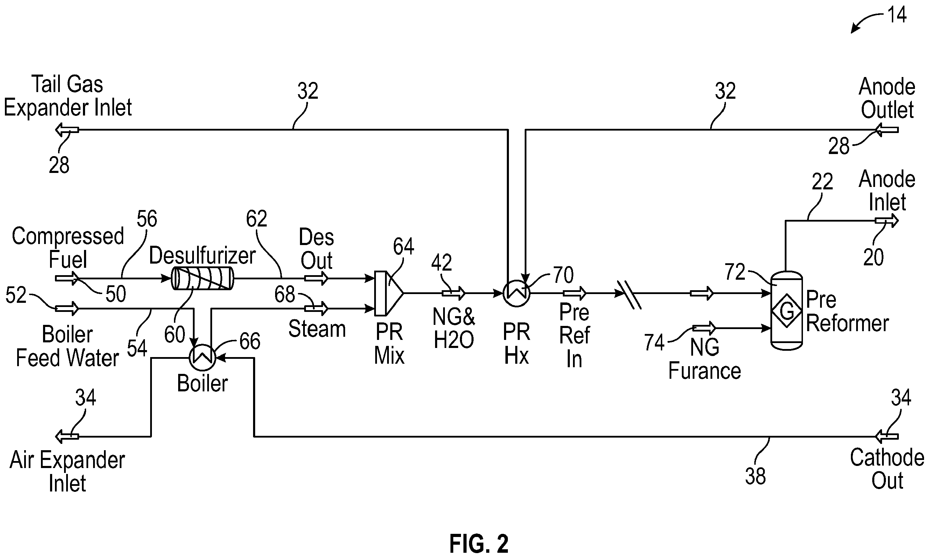

Referring now to FIG. 2, illustrated is an embodiment of the fuel processing and heat recovery portion 14. Compressed fuel supply flow 50 is passed through a desulfurizer 60, and is directed along a desulfurizer outlet line 62 into a mixer 64. The water supply 52 is directed into a boiler 66, where cathode products 34 flowing through the cathode outlet line 38 are utilized to convert the water supply 52 into a steam flow 68. The steam flow 68 is mixed with the fuel supply flow 50 at the mixer 64, to define the fuel flow 42. The fuel flow 42 is heated at a pre-reforming heat exchanger 70 by thermal energy exchange with the anode products 28 flowing through the anode outlet line 32, and into a pre-reformer 72, which in some embodiments is heated by a furnace 74 powered by, for example, natural gas. The fuel flow 42 is then directed from the pre-reformer 72 along the fuel line 22. In some embodiments, the pre-reformer 72 converts 10% to 100% of a fuel, such as natural gas, into a reformate in fuel flow 42, where the reformate may contain hydrogen, carbon dioxide, steam and carbon monoxide, in addition to unreacted fuel.

Referring again to FIG. 1, the cathode products 34 are directed from the fuel processing and heat recovery portion 14 toward the water recovery portion 16. In some embodiments, the cathode products 34 may be directed through an air expander 136 upstream of the water recovery portion 16 and then introduced to the water recovery portion 16 via a cathode exhaust line 76. The anode products 28 flowing through the anode outlet line 32 are directed from the fuel processing and heat recovery portion 14 toward the water recovery portion 16. In some embodiments, the anode products 28 may be directed through a tail fuel expander 78 and then to the water recovery portion 16 via an anode exhaust line 80.

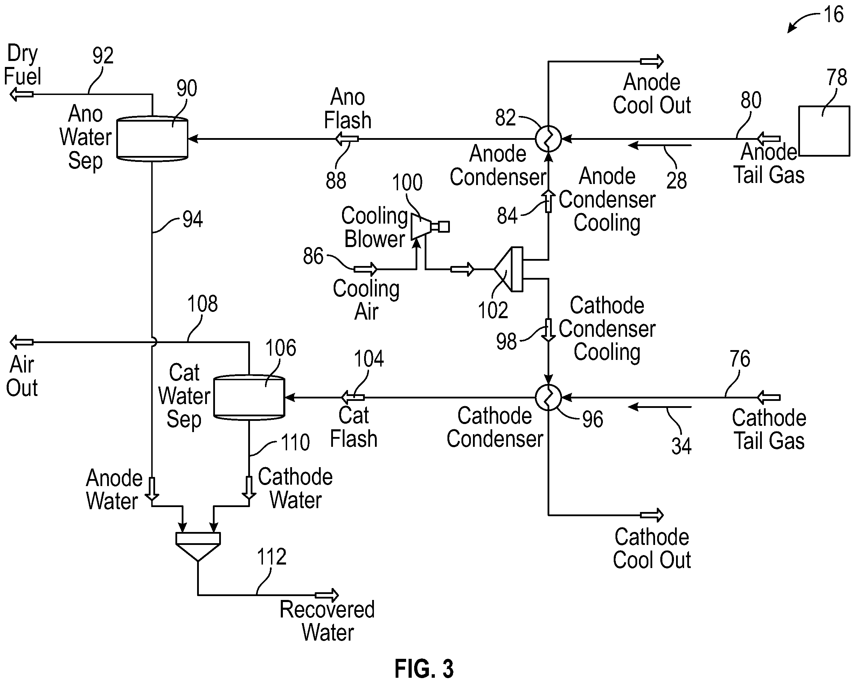

The water recovery portion 16 recovers water from both the anode products 28 and the cathode products 34 and directs the recovered water from the water recovery portion 16 to the fuel processing and heat recovery portion 14 as the water supply 52. Referring now to FIG. 3, the water recovery portion 16 includes an anode condenser 82 through which an anode condenser cooling air flow 84 is directed from a cooling air supply 86. The anode products 28 from the tail fuel expander 78 are directed through the anode condenser 82 via the anode exhaust line 80 and water in the anode products 28 condenses out due to thermal energy exchange with the anode condenser cooling air flow 84. The anode products 28 then proceed via an anode flash line 88 and into an anode water separator 90. In the anode water separator 90, an output fuel flow 92 is separated from an anode water flow 94. In one embodiment, the cooling air flow 84, which could be anywhere from 9% to 100% O₂, could be used as air flow 26. In a further embodiment, either or both of cooling air flows 84 and 98 could be mixed with a fresh oxygen source prior to air flow 26. Further, in another embodiment, cooling blower 100 and air compressor 48 could be combined into a single device for managing oxygen-containing flow used for condensing as well as a cathode source. In some embodiments, the cooling air supply 86 passes through the cooling blower 100 and a cooling airflow splitter 102 to supply both the anode condenser cooling airflow 84 and the cathode condenser cooling airflow 98. Referring now to FIG. 1, in some embodiments the output fuel flow 92 may be utilized in the bottoming cycle portion 18, as will be discussed below. Alternatively, the output fuel flow 92 may be recycled, forming a portion of the fuel supply flow 50. Further, the output fuel flow 92 may be combusted with cathode exhaust to provide heat for the cathode heat exchanger 44 or the boiler 66. This would allow for reduction in size of the cathode heat exchanger 44 and/or the boiler 66.

Referring again to FIG. 3, the water recovery portion 16 includes a cathode condenser 96, through which a cathode condenser cooling air flow 98 is directed from the cooling air supply 86. In some embodiments, the cooling air supply 86 passes through the cooling blower 100 and the cooling airflow splitter 102 to supply both the anode condenser cooling airflow 84 and the cathode condenser cooling airflow 98. The cathode products 34 from the air expander 136 are directed through the cathode condenser 96 via the cathode exhaust line 76 and water in the cathode products 34 condenses out due to thermal energy exchange with the cathode condenser cooling airflow 98. The cathode products 34 then proceed through a cathode flash line 104 and into a cathode water separator 106. In the cathode water separator 106, an output air flow 108 is separated from a cathode water flow 110. The anode water flow 94 and the cathode water flow 110 are collected to define a recovered water flow 112. As noted above, in one embodiment, the output cooling air flow 98 may be recycled, forming all or a portion of the air supply flow 26.

Referring again to FIG. 1, the recovered water flow 112 may be collected in a water tank 114. At least a portion of the recovered water flow 112 is directed from the water tank 114 as the water supply 52 for use by the fuel processing and heat recovery portion 14. Excess water 116 may be bled from the system.

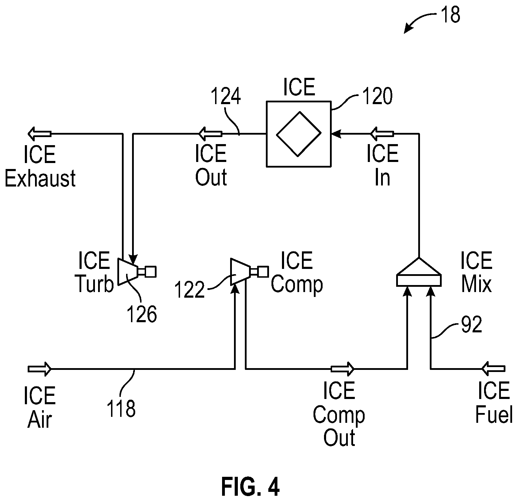

Referring now to FIG. 4, an example of a bottoming cycle portion 18 is illustrated. The output fuel flow 92 is input into the bottoming cycle portion 18 and mixed with an internal combustion engine airflow 118 and directed into an internal combustion engine 120. In some embodiments, the internal combustion engine airflow 118 is compressed at an internal combustion engine compressor 122 prior to being introduced to the internal combustion engine 120. In some embodiments, the internal combustion engine 120 is for example, a reciprocating engine following an Otto or Diesel thermodynamic cycle; a Brayton cycle machine, such as a gas turbine engine; a thermoelectric device; a Stirling engine; or a Rankine cycle machine. Combustion gases 124 are output from the internal combustion engine 120 and may be passed through a turbine 126 before being exhausted to ambient. Alternatively, for some applications, the internal combustion engine is removed or replaced with one or more energy recovery devices noted above.

Operation of a proton conducting SOFC with full water recycle enables a high efficiency system design that is both light and less expensive compared to conventional SOFC designs. As such it is of eminent interest to all-electric aircraft concepts. It combines the high efficiency of fuel cell power systems with high power density and lower cost than conventional fuel cell systems.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A proton-conducting solid oxide fuel cell system (10), comprising:
a proton-conducting solid oxide fuel cell including:
an anode through which a flow of fuel is directed; and
a cathode through which a flow of air containing 9% to 100% oxygen is directed; and
a water recovery portion (16), including:
an anode water recovery unit to recover anode water from anode products output from the anode; and
a cathode water recovery unit to recover cathode water from cathode products output from the cathode.

2. The proton-conducting solid oxide fuel cell system of claim 1, wherein the anode water and the cathode water are collected for re-use by the system.

3. The proton-conducting solid oxide fuel cell system of claim 1 or 2, further comprising an anode heat exchanger located upstream of an anode inlet of the anode at which the cathode products exchange thermal energy with the flow of fuel, or further comprising a cathode heat exchanger disposed upstream of a cathode inlet of the cathode at which the cathode products exchange thermal energy with the flow of air.

4. The proton-conducting solid oxide fuel cell system of any preceding claim, further comprising a fuel processing and heat recovery portion including a mixer wherein the anode water and the cathode water are introduced to a fuel supply flow at the fuel processing and heat recovery portion and directed toward the anode as the flow of fuel.

5. The proton-conducting solid oxide fuel cell system of claim 4, further comprising a boiler upstream of the mixer, the anode water and the cathode water converted to steam in the boiler via thermal energy exchange with the cathode products, and optionally further comprising a desulfurizer upstream of the mixer, through which the fuel supply flow is passed.

6. The proton-conducting solid oxide fuel cell system of claim 4, further comprising a fuel reformer that pre-reforms 25-100% of the anode water, cathode water and fuel supply flow mixture prior to sending the mixture to an anode heat exchanger, and optionally wherein a processing heat exchanger is located downstream of the mixer to heat the flow of fuel by thermal energy exchange with the anode products prior to the heated mixture entering the reformer, and/or the reformer is heated with a resistive heater, and/or a combustion furnace, and/or an inductive heater, a heated fluid moving through a jacketed heater, such as supercritical steam or pressurized water or hot exhaust from an exhaust gas burner, and/or via heat integration with the solid oxide fuel cell.

7. The proton-conducting solid oxide fuel cell system of claim 4, further comprising a tail fuel expander disposed between the fuel processing and heat recovery portion and the water recovery portion through which the anode products are directed.

8. The proton-conducting solid oxide fuel cell system of claim 4, further comprising an air expander disposed between the fuel processing and heat recovery portion and the water recovery portion through which the cathode products are directed.

9. The proton-conducting solid oxide fuel cell system of any preceding claim, wherein one or more of the anode water or the cathode water is recovered by one of an air-cooled condenser and a water separator, or a membrane separator, a liquid cooled condenser, or by an expansion valve cooler.

10. The proton-conducting solid oxide fuel cell system of any preceding claim, wherein the anode water recovery unit separates the anode water from an output fuel flow and the cathode recovery unit separates the cathode water from an output air flow, and optionally further comprising one of a reciprocating engine following an Otto or Diesel thermodynamic cycle; a Brayton cycle machine, such as a gas turbine engine; a thermoelectric device; a Stirling engine; or a Rankine cycle machine to which the output fuel flow is directed.

11. A method of operating a proton-conducting solid oxide fuel cell system, comprising:
directing a flow of fuel through an anode;
directing a flow of air containing 9% to 100% oxygen through a cathode;
recovering anode water from anode products output from the anode via an anode condenser and an anode water separator, the anode water separated from an output fuel flow; and
recovering cathode water from cathode products output from the cathode via a cathode condenser and a cathode water separator, the cathode water separated from an output air flow.

12. The method of claim 11, wherein the anode water and the cathode water are collected for re-use by the system.

13. The method of claim 11 or 12, further comprising introducing the anode water and the cathode water to a fuel supply flow at a mixer of a fuel processing and heat recovery portion and the mixture is directed toward the anode as the flow of fuel.

14. The method of claim 13, further comprising converting the anode water and the cathode water to steam at a boiler upstream of the mixer, the anode water and the cathode water converted to steam in the boiler via thermal energy exchange with the cathode products, or further comprising heating the flow of fuel at a processing heat exchanger downstream of the mixer, by thermal energy exchange with the anode products.

15. The method of any of claims 11 to 14, wherein the cathode products exchange thermal energy with the flow of fuel at an anode heat exchanger located upstream of the anode.
